Europäisches Patentamt

European Patent Office

Office européen des brevets

(11) Publication number: **0 480 512 A1**

# EUROPEAN PATENT APPLICATION

(21) Application number: **91202569.9**

(22) Date of filing: **02.10.91**

(51) Int. Cl.5: **G01B 11/00**, G01D 5/26

(30) Priority: **11.10.90 NL 9002211**

(43) Date of publication of application:
**15.04.92 Bulletin 92/16**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Van Amstel, Willem Dirk**
**c/o INT. OCTROOIBUREAU B.V., Prof.**

**Holstlaan 6**
**NL-5656 AA Eindhoven(NL)**
Inventor: **Van de Goor, Petrus Fredericus**
**Antonius**
**c/o INT. OCTROOIBUREAU B.V., Prof.**
**Holstlaan 6**
**NL-5656 AA Eindhoven(NL)**

(74) Representative: **Cobben, Louis Marie Hubert**
**et al**
**INTERNATIONAAL OCTROOIBUREAU B.V.**
**Prof. Holstlaan 6**
**NL-5656 AA Eindhoven(NL)**

(54) **Position-sensitive radiation detection system and optical scanning device provided with such a system.**

(57) A position-sensitive radiation detection system comprises a radiation-conducting rod (10) and two radiation detectors (21, 22) arranged at both ends of the rod. Radiation which is incident in the rod *via* an entrance window (11) is dispersed on a target plane, for example, by a diffusely reflecting facet (12) and guided towards the detectors while simultaneously being attenuated. Consequently, the relative intensity on each detector (21, 22) is dependent on the position of the point where the radiation beam (1) is incident on the target plane in the rod (10). Evaluation of the output signals ($I_1$, $I_2$) of the detectors in a processing unit (30) yields the position (X) of the incident radiation.

FIG. 1a

FIG. 1b

EP 0 480 512 A1

The invention relates to a position-sensitive radiation detection system. By means of such a detection system not only the intensity of the radiation incident on the detection system, but also the position where the radiation is incident on the radiation-sensitive surface is measured by means of such a detection system. A position-sensitive radiation detection system is used, for examle, in a contactless optical height meter where a radiation spot is formed by a radiation beam on an object to be measured. The spot is imaged on the target plane of the detection system by means of a lens and information about the position of the radiation spot and hence about the height of the surface of the object is obtained by measuring the position of the image.

A position-sensitive radiation detection system is known, for example, from "Patent Abstracts of Japan", vol. 12, no. 425 (1988, E-681), p. 77, Kokais no. 164 280 and 164 281. These documents disclose detection systems which comprise a radiation-sensitive surface of semiconductor material. The surface is bounded by two or four connections each of which extends along an edge of the surface. When light is incident on the surface, charge carriers, which flow towards one of the connections, are released in the semiconductor material. As the spot is closer to a connection, a larger part of the current flows towards this connection. The relative current intensity which is thereby generated in the connections is a measure of the position where the radiation reaches the surface.

The known position-sensitive detection systems have a sensitivity to the radiation intensity which is determined by the conversion of incident light to free charge carriers. This means that the sensitivity is limited to a specific spectral and intensity range, that is to say, the incident radiation must have a minimal intensity which is relatively high, at least with respect to available radiation detection systems which are not position-sensitive so as to obtain a sufficiently large signal at all connections. Also the size and hence the spatial measuring range is limited, as well as the shape of the radiation-sensitive surface. It has further been found that such a position-sensitive detection system is not angle-independent. In other words, the distribution of the output currents is influenced by the angle at which radiation is incident on the radiation-sensitive surface.

It is one of the objects of the invention to provide a position-sensitive radiation detection system which has fewer limitations as regards the size and shape of the radiation-sensitive surface and which can thus be adapted to the curvature of the field in an imaging system.

To this end a position-sensitive radiation detection system according to the invention comprises a radiation-conducting volume, at least two radiation detectors arranged at both sides of the volume for generating output signals which are a measure of the quantity of radiation incident on each detector, and a target plane extending between the radiation detectors, the radiation-conducting volume attenuating radiation propagating therein and the outputs of the radiation detectors being further connected to means for determining the position of radiation incident on the target plane with reference to the relative intensity of the output signals of the detectors. Radiation which is incident in the radiation-conducting volume via a radiation entrance window is guided towards the detectors after it has been reflected on the target plane. These detectors are, for example, very sensitive opto-electrical converters such as photomultiplier tubes (PMT) or avalanche photodiodes (APD) having a high internal amplification or a large dynamic range.

The target plane, i.e. the primary radiation-sensitive surface may also be considerably larger without the measuring speed being considerably reduced. This is important for parameters of the system such as bandwidth and response time. Also the shape of the radiation-conducting volume and the target plane is easier to optimize for the chosen application in a detection system according to the invention. When the incident radiation forms an extensive spot on the target plane, the point of gravity of the radiation distribution is represented as the spot.

It is to be noted that a light-conducting rod having a radiation detector at both ends is known *per se* from "Patent Abstracts of Japan", vol. 12, no. 199, Kokai no. 246,010 (1987). This document describes an optical scanning device in which the position of the scanning spot is determined by splitting a measuring beam from the scanning beam and causing this beam to be incident on a photodetection system *via* a grating. The photodetection system comprises two detectors which are interconnected *via* a rod. The rod is provided directly behind the grating. The position of the scanning spot is determined by measuring the pulsatory signal which is produced by the measuring beam which is modulated due to its movement across the transparent and opaque parts of the grating. Thus, the position is not measured by comparing the output signals of the two detectors, so that a calibration with respect to a known position will always be required before the actual position of the scanning spot can be determined. Such a device cannot be used to determine the position of the scanning spot on an irregular surface, because such a surface may have steep slopes and differences in reflection whereby the position of the image of the scanning spot on the radiation-sensitive detection system may jump the intensity of the imaged radiation spot may vary.

In one embodiment of the radiation detection system according to the invention the target plane in the radiation-conducting volume is arranged opposite a radiation entrance window and is diffusely reflecting. The relative quantity of radiation incident on each detector is thereby rendered substantially independent on the angle of incidence on the radiation detection system, so that the effects of specular reflection on the target plane are avoided as much as possible. For example, $BaSo_4$ or a reflecting dull white lacquer may be used for the diffusely reflecting layer.

In one embodiment in which the angle independence is obtained in another way, the radiation entrance window is provided with radiation-diffusing means. To this end the entrance window is provided with a roughening or a micrograting. In such an embodiment the entrance window is the target plane on which the beam is incident.

In a one-dimensional embodiment the diffusely reflecting strip or the radiation window may be formed with a variable width so that dispersion occurs which results in an attenuation of the intensity incident on the detectors, which attenuation varies in a predetermined manner in dependence on the position of the incident radiation.

In one embodiment of the radiation detection system the radiation-conducting volume is filled with a transparent material, for example, polymethyl methacrylate. In this embodiment the captured radiation is guided towards the detectors by total internal reflection on the surface of the synthetic material. Synthetic material has the advantage that it can be easily given the desired shape and that the extent of attenuation of propagating radiation can be satisfactorily fixed at a predetermined value by adding absorbing material.

Radiation can also be guided within the radiation detection system by surrounding the radiation-conducting volume, with the exception of the entrance window, with an envelope which is reflective at its inner side. This envelope is also used as a shield against ambient light. The volume may be a hollow cylinder as well as a glass or synthetic material rod on which a reflective layer is provided. Loss of radiation intensity due to radiation being incident substantially perpendicularly on the wall of the volume, so that there is hardly any reflection, does not occur.

The envelope which is reflective on its inner side is preferably provided volume of transparent material with an intermediate gap. The reflective envelope is provided without contacting the radiation-conducting volume so that total internal reflection is not frustrated. It has been found that this provides a considerably larger quantity of incident light on the detectors than by total internal reflection alone or only a reflective rod.

A further embodiment of the radiation detection system according to the invention has the property that the radiation-conducting volume is provided with material having luminescent or scintillating properties. This material is provided, for example on the target plane. By making use of such a material in the diffusely reflecting layer or in the radiation-conducting volume, types of radiation and/or wavelengths can be detected to which the opto-electrical converters are insensitive or little sensitive. The radiation incident on the radiation target plane generates radiation of a different wavelength in the radiation-conducting volume.

It is to be noted that it is known *per se* from "Patent Abstracts of Japan", vol. 9, no. 101 (P 353), p. 104, Kokai no. 226 318 (1984) to use a fluorescent lacquer in a detection system for determining a scanning position. Similarly as in the afore-mentioned Kokai no. 246 010, there is, however, no question of a comparison between the output signals of two radiation detectors so as to determine the position of the incident radiation, but the position is also determined by means of a lattice in the radiation beam.

In one embodiment of the radiation-sensitive detection system according to the invention radiation detectors are arranged at four sides of the radiation-conducting volume for determining the position of radiation incident on the target plane in two dimensions.

A further embodiment of the radiation detection system according to the invention has the property that the radiation-conducting volume and the radiation detectors are implemented as an integrated optical circuit. The radiation-conducting volume, the radiation detectors and possibly the circuit for analysing the output signals are arranged on one and the same piece of semiconductor material. This results in a compact and robust position-sensitive radiation detection system which may have a high sensitivity.

In another embodiment of the position-sensitive radiation detection system according to the invention the radiation-conducting volume is an optical fibre. An optical fibre is suitable for use in a small and very fast position-sensitive detection system.

A position-sensitive radiation detection system according to the invention is eminently suitable for use in an optical scanning device for measuring the relief and/or the reflectivity of a surface. Such a surface is, for example, a plate of electrically insulating material provided with metallized conducting strips and electronic components (printed circuit board) as is used in the manufacture of electronic circuits. A scanning device is used, for example, in the case of automated inspection of the conducting strips and the components.

An optical scanning device according to the invention comprises a radiation source unit for generating a radiation beam and for forming a scanning spot on a surface to be scanned, an imaging system for imaging said radiation spot on a position-sensitive radiation detection system, which system comprises a radiation-conducting volume and at least two radiation detectors arranged at both sides thereof for determining the position of the image on the radiation detection system.

The aspects mentioned in the foregoing and other more detailed aspects of the invention will now be described in greater detail with reference to the accompanying drawings.

In the drawings

Figs. 1a and 1b are a diagrammatic and an elevational view of an embodiment of the detection system according to the invention;

Figs. 2a and 2b show some intensity curves for a radiation detector as a function of the spot of the radiation beam;

Fig. 3 shows a radiation-conducting volume having an entrance window and a diffusely reflecting facet having a variable width;

Fig. 4 is a cross-section of a radiation-conducting volume in which an internally reflective envelope is used;

Fig. 5 shows an embodiment of a position-sensitive radiation detection system for determining the position of the incident radiation in two dimensions;

Fig. 6 shows an integrated optical electronic circuit; and

Fig. 7 shows an optical scanning device in which a position-sensitive radiation detection system is used.

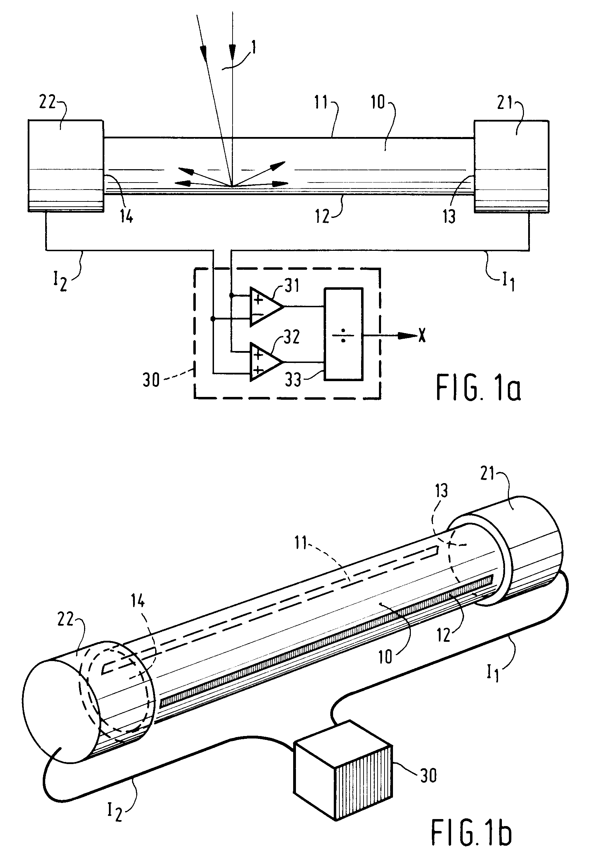

Figs. 1a and 1b are a diagrammatic and an elevational view of a radiation-sensitive detection system according to the invention. The system comprises a rod-shaped radiation-conducting volume 10 of a transparent material, for example, glass or a synthetic material such as polymethyl methacrylate (PMMA). The rod has a radiation entrance window 11. Radiation detectors 21 and 22, for example, photomultiplier tubes or avalanche photodiodes whose radiation-sensitive surface is directed towards the end faces 13 and 14 are arranged at the two ends 13 and 14 of the rod 10. The interspace between volume and detector is preferably filled up with an optical resin or adhesive with which an optical coupling is obtained. The outputs of the radiation detectors 21 and 22 are connected to a processing system 30.

The position-sensitive radiation detection system operates as follows. A radiation beam 1 is incident on a certain position X through the radiation entrance window 11 in the rod 10. In this rod the light is dispersed, for example, on a diffusely reflecting facet 12, *i.e.* the target plane, which is arranged opposite the entrance window 11. This facet 12 is provided with, for example, a dull reflective material such as barium sulfate ($BaSo_4$) or another diffusely reflecting lacquer. The material must have a high reflection coefficient for the wavelength of the radiation and it may be white or have, for example, the colour of the radiation. The function of the diffusely reflecting surface is to disperse radiation from the beam 1 as uniformly as possible in both directions towards the end faces 13 and 14, independent of the angle of incidence of the beam. The same effect can be obtained by giving the entrance window 11 dispersing properties, for example, by roughening or by providing a micrograting. In that case the entrance window is the target plane. For a maximally accurate determination of the position the beam 1 is to be focused on the target plane.

When radiation from the beam 1 has been dispersed in the rod 10, the radiation is guided towards the ends 13 and 14 due to reflection on the walls. The radiation leaves the rod through these ends and is incident on the radiation-sensitive surface of the radiation detectors 21 and 22. Since loss of radiation occurs due to absorption, incomplete reflection on the rod surface and loss *via* the target plane when the radiation is being guided, the radiation intensity at each end will be dependent on the spot position of the incident beam 1. The closer the spot is located near one end, the higher the intensity will be at that end and the lower at the other end.

The radiation detectors 21 and 22 generate output signals $I_1$ and $I_2$, respectively, whose magnitude is a measure of the intensity incident on the respective detector. The imbalance in the output signals caused by the propagation losses in the rod is converted in the processing system 30 to a signal which is a measure of the position X of the spot of the radiation beam. This is effected, for example, by subtracting the signals $I_1$ and $I_2$ from each other in a difference circuit 31, whereafter the difference obtained is normalized in a circuit 33 by dividing it by a signal $I_1 + I_2$ which originates from an adder circuit 32. When the incident beam is wide, *i.e.* a part of the length of the target plane is simultaneously irradiated, the calculated value X will indicate the position of the point of gravity of the radiation distribution.

In an alternative embodiment the processing unit comprises two A/D converters which reproduce the signals $I_1$ and $I_2$ in a digital form whereafter the value for X is calculated therefrom by means of a digital computer or a microprocessor. For example, the sensitivity characteristics of the detectors may then be taken into account.

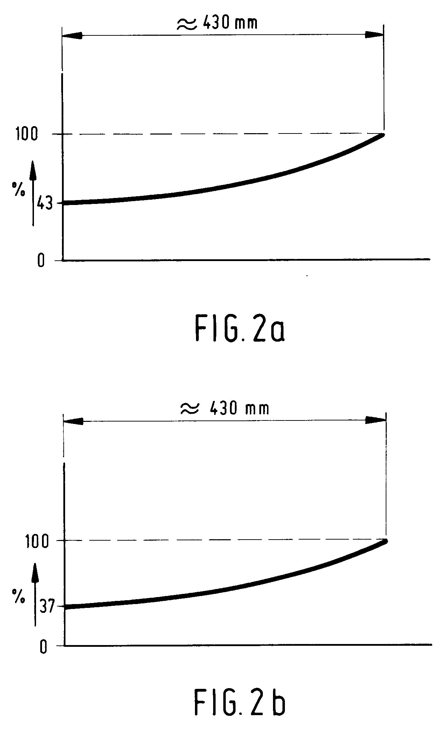

Figs. 2a and 2b show graphs of measurements of the relative position sensitivities for a one-dimensional position-sensitive radiation detection system. The radiation-conducting volume comprises a round rod of PMMA in this case, with a diameter of 25 mm and a length of 700 mm. The graphs show the intensity variation in one detector when the scanning spot covers a trajectory having a length of approximately 430 mm in the centre of the rod. The radiation used has a wavelength of 633 nm. Opposite the entrance window a diffusely reflecting strip is provided on the radiation-conducting volume. Fig. 2a shows the variation of the intensity for a 2 mm wide strip, while Fig. 2b shows the same for a 4 mm wide strip. These Figures show that the width of the strip influences the intensity variation as a function of the distance. In Fig. 2a the intensity decreases to 43% of the maximum intensity and in the wider strip shown in Fig. 2b the intensity decreases to 37%. This fact can be utilized to adapt intensity curves to a desired sensitivity of the position by varying the width of the target plane as a function of the position.

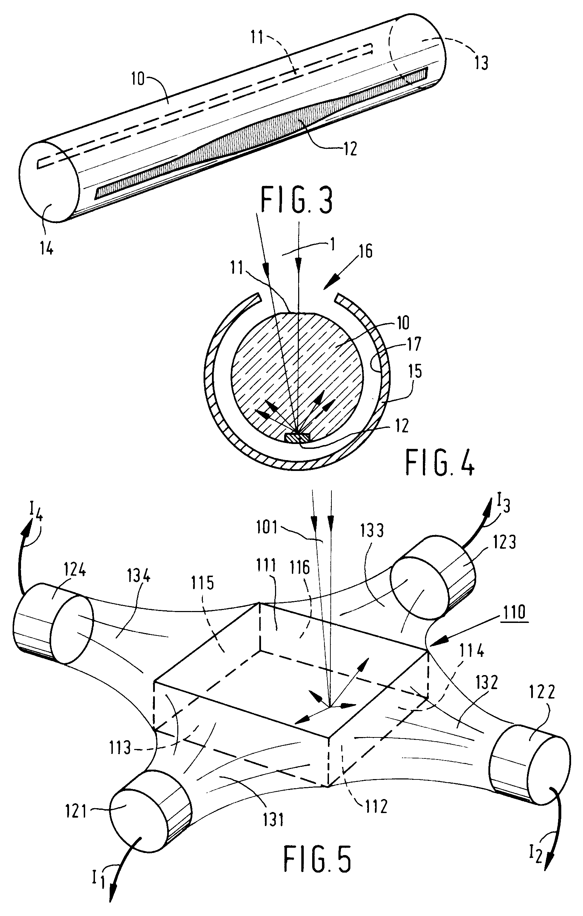

This is shown in Fig. 3. The target plane 12 of the rod 10 is relatively wide in the centre and it narrows towards the ends. Due to the larger width in the centre of the rod radiation propagating in the rod is dispersed to a greater extent in this centre, which leads to relatively more loss and hence to a larger attenuation for this part of the radiation which is conducted along the centre of the rod. This results in the gradient of the sensitivity curve being relatively large in the centre.

Fig. 4 is a cross-section of a radiation-conducting rod having an internally reflecting envelope. The radiation-conducting volume 10 is surrounded by a sleeve or envelope 15. The entrance window 11 coincides with a slot 16 in the envelope. The inner side of the envelope 15 is provided with a reflecting layer 17 by which incident radiation is reflected. This has the advantage that the angle at which radiation is incident on the wall of the volume does not influence or hardly influences the extent of reflection and hence the radiation loss.

The radiation-conducting volume 10 may be a synthetic material or glass rod in which the reflecting layer is provided at its outer side and the rod thus also serves as a support for the reflecting layer. The volume may also be concave. However, the radiation-conducting volume preferably consists of a solid transparent rod 10 surrounded with clearance by an envelope 15. By leaving a space between the rod and the envelope, the total internal reflection on the surface of the rod is not frustrated. It has been found that this combination yields the largest radiation intensity on the detectors.

Fig. 5 shows an embodiment of a position-sensitive radiation detection system comprising four radiation detectors at four sides of the radiation-conducting volume. The radiation-conducting volume 110 is square or rectangular and has an upper side 111, a lower side 112 and four side faces 113, 114, 115 and 116. The upper side 111 is the radiation entrance window. The lower side 112 is provided with, for example, a diffusely reflecting material so as to eliminate the influence of the direction of the incident radiation beam 101 as much as possible and constitutes the target plane. The lower side may have a shape deviating from that of the upper side so that the radiation-conducting volume has a variable thickness which can be adapted to the area of use, for example, curvature of an image field. The four side faces 113, 114, 115 and 116 are provided with radiation detectors 121, 122, 123 and 124 which convert the radiation incident thereon into electric signals $I_1$, $I_2$, $I_3$ and $I_4$. These signals are processed by means of a processing unit and the coordinates of the spot 101 on the target plane are determined from these signals. Radiation conductors 131, 132, 133 and 134 with which the shape of the side faces is adapted to the shape of the detectors may be arranged between the side faces 113, 114, 115 and 116 and the detectors 121, 122, 123 and 124.

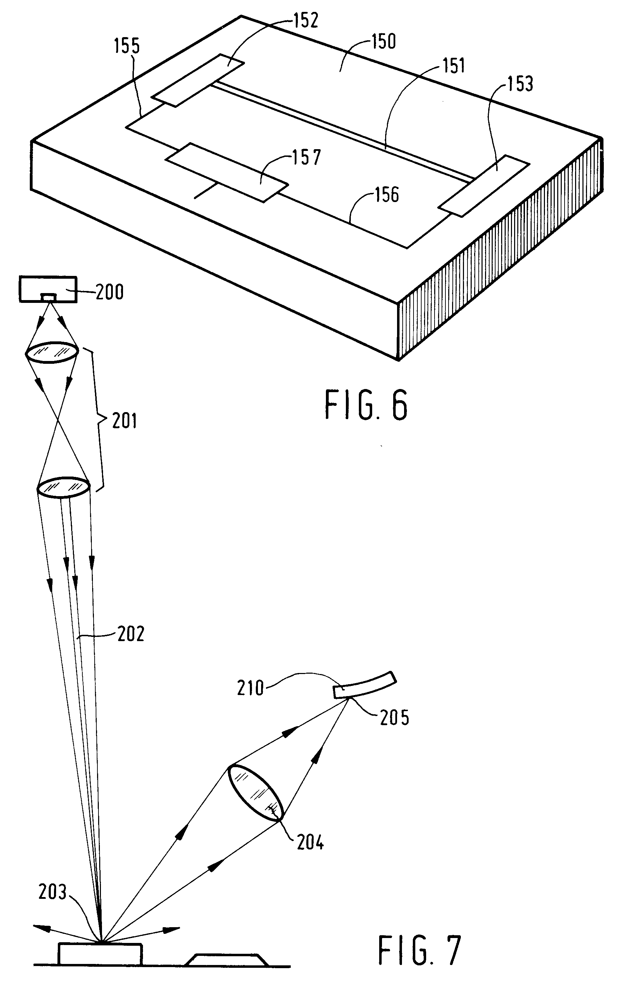

Fig. 6 shows an integrated optical system. A groove 151 is etched in known manner in a substrate 150 of semiconductor material, for example, silicon. This groove is filled with transparent material having a refractive index which is larger than the refractive index of the substrate material. The filled groove is now a waveguide which functions as a radiation-conducting volume. Radiation detectors 152 and 153 and other necessary elements 155-157 such as conductors and circuits are provided in the substrate material at both ends by means of techniques known from the IC manufacture. The result is a compact embodiment of a radiation-sensitive detection system.

Fig. 7 shows an optical scanning device in which a position-sensitive radiation detection system according to the invention is used. A beam of light is generated by means of a radiation source 200, for example, a semiconductor laser, which beam is converted into a narrow beam 202 by means of an optical system 201. This beam is guided towards a surface to be scanned on which it forms a radiation spot 203 from which the incident radiation is dispersed in arbitrary directions.

A part of this dispersed radiation is captured by means of a lens system 204 and focused in a plane 205 where the target plane of a position-sensitive radiation detection system 210 is provided. An image of the radiation spot 203 is thus formed on the target plane of this detection system. The position of this image is determined by the position of the spot 203 and hence of the height of the surface to be scanned in the radiation beam 202. The height and the relief of the surface can thus be determined by measuring the position of the image by means of the position-sensitive radiation detection system 210.

In the case of an accurate measurement the image of the radiation spot 203 on the position-sensitive detection system should be as small as possible, in other words, the image must be in focus. Since a different height of the surface means that the sharp image of the spot 203 is also formed in another position, the position-sensitive radiation detection system 210 should preferably have a curved target plane which is adapted to the curvature of the field. This is possible with a detection system according to the present invention.

To scan the surface, the object can be moved to and fro with respect to the scanning beam. The scanning beam can also be moved across the object and the radiation spot can be imaged on a detection system *via* a synchronously scanning system. Such a scanning device is described, for example, in the non-prepublished Netherlands Patent Application No. 9000100 (PHN 13.224).

## Claims

1. A position-sensitive radiation detection system comprising a radiation-conducting volume, at least two radiation detectors arranged at opposite sides of the volume for generating output signals which are a measure of the quantity of radiation incident on each detector, and a target plane extending between the radiation detectors, the radiation-conducting volume attenuating radiation propagating therein, the outputs of the radiation detectors being means for determining the position of radiation incident on the target plane from the relative intensities of the output signals of the detectors.

2. A position-sensitive radiation detection system as claimed in Claim 1, wherein the target plane in the radiation-conducting volume is arranged opposite a radiation entrance window and is diffusely reflecting.

3. A position-sensitive radiation detection system as claimed in Claim 1 or 2, wherein the radiation entrance window is provided with radiation-diffusing means.

4. A position-sensitive radiation detection system as claimed in Claim 1, 2 or 3, wherein the radiation-conducting volume is filled with a transparent material, for example, polymethyl methacrylate.

5. A position-sensitive radiation detection system as claimed in Claim 1, 2, 3 or 4, wherein the radiation-conducting volume is surrounded by an envelope which is reflective at its inner side.

6. A position-sensitive radiation detection system as claimed in Claim 5, wherein the envelope which is reflective at its inner side is arranged around a solid volume of transparent material with substantially no mechanical contact between the envelope and the volume.

7. A position-sensitive radiation detection system as claimed in Claim 1, 2, 3, 4, 5 or 6, wherein the radiation-conducting volume is provided with material having luminescent or scintillating properties.

8. A position-sensitive radiation detection system as claimed in Claim 1, 2, 3, 4, 5, 6 or 7, wherein radiation detectors are arranged at four sides of the radiation-conducting volume for determining the position of the radiation incident on the target plane in two dimensions.

9. A position-sensitive radiation detection system as claimed in any one of the preceding Claims, wherein the radiation-conducting volume and the radiation detectors are implemented as an integrated optical circuit.

10. A position-sensitive radiation detection system as claimed in any one of Claims 1 to 7, wherein the radiation-conducting volume is an optical fibre.

11. An optical scanning device comprising a radiation source unit for generating a radiation beam and for forming a scanning spot on a surface to be scanned, an imaging system for imaging said scanning spot on a position-sensitive radiation detection system, which system comprises a radiation-conducting volume and at least two radiation detectors arranged at both sides thereof for determining the position of the image on the radiation detection system.

FIG. 1a

FIG.1b

FIG. 2a

FIG. 2 b

FIG. 3

FIG. 4

FIG. 5

FIG. 6

FIG. 7

European Patent
Office

**EUROPEAN SEARCH REPORT**

Application Number

EP    91 20 2569

Page  1

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-3 463 931 (GENERAL SIGNAL CORP.) <br> * column 2, line 35 - column 3, line 38; figures * <br> --- | 1,3,5 | G01B11/00 <br> G01D5/26 |
| Y | PATENT ABSTRACTS OF JAPAN <br> vol. 7, no. 220 (P-226)(1365) 30 September 1983 <br> & JP-A-58 113 808 ( KOMATSU ) 6 July 1983 | 1,3,10 | |
| A | * abstract * <br> * abstract * <br> --- | 9 | |
| Y | REVIEW OF SCIENTIFIC INSTRUMENTS <br> vol. 60, no. 3, March 1989, AMERICAN INSTITUTE <br> OF PHYS. NEW YOR <br> pages 327 - 331; <br> BURNS: 'METHOD FOR FABRICATING A SIMPLE LOW-COST <br> POSITION-SENSITIVE PHOTODETECTOR' <br> * the whole document * <br> --- | 1,5,10 | |
| A,D | PATENT ABSTRACTS OF JAPAN <br> vol. 9, no. 101 (P-353)2 May 1985 <br> & JP-A-59 226 318 ( FUJITSU ) 19 December  1984 <br> * abstract * <br> --- | 1,7 | |
| A,D | PATENT ABSTRACTS OF JAPAN <br> vol. 12, no. 199 (P-689)14 April 1988 <br> & JP-A-62 246 010 ( FUJI ) 27 October 1987 <br> * abstract * <br> --- | 1 | TECHNICAL FIELDS SEARCHED (Int. Cl.5 ) <br><br> G01B <br> G01D <br> G02B |
| A | PATENT ABSTRACTS OF JAPAN <br> vol. 11, no. 37 (P-543)(2484) 4 February 1987 <br> & JP-A-61 207 951 ( NEC ) 16 September 1986 <br> * abstract * <br> --- | 1,2,8 | |
| A | MEASUREMENTS. <br> vol. 6, no. 1, 1 March 1988, LONDON GB <br> pages 5 - 9; <br> B.SCHMIDT E.A.: 'HYBRID INTEGRATED SENSOR FOR <br> POSITION MEASUREMENT' <br> * the whole document * <br> --- | 1,8,9 | |

The present search report has been drawn up for all claims

| Place of search | Date of completion of the search | Examiner |
|---|---|---|
| THE HAGUE | 22 NOVEMBER 1991 | RAMBOER P. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 432 308 (G.BRUNNER) 9 January  1986<br>* page 9 - page 10; figures *<br>--- | 5,7 | |
| A | DE-A-3 317 057 (G.BRUNNER) 15 November 1984<br>* page 14 - page 20; figures *<br>--- | 1,5-7 | |
| A | DE-A-2 923 386 (FMC) 13 December  1979<br><br>* page 15 - page 22, paragraph 1; figures *<br>--- | 1,2,4,5,<br>7,10 | |
| A | DE-A-3 441 498 (LICENTIA) 15 May 1986<br>* page 7, line 23 - page 11; figures *<br>--- | 1,5 | |
| A | DE-A-3 247 659 (W.RUHRMANN) 28 June 1984<br>* page 12 *<br>--- | 5,7 | |
| A | US-A-4 157 477 (R.J.KALL) 5 June 1979<br>* column 4, line 5 - column 6, line 41; figures<br>* | 1,2,4,7 | |
| | ----- | | TECHNICAL FIELDS SEARCHED (Int. Cl.5 ) |

The present search report has been drawn up for all claims

| Place of search | Date of completion of the search | Examiner |
|---|---|---|
| THE HAGUE | 22 NOVEMBER 1991 | RAMBOER P. |

EPO FORM 1503 03.82 (P0401)